# EUROPÄISCHE PATENTSCHRIFT

(11) **EP 1 316 383 B1**
(45) Veröffentlichungstag und Bekanntmachung des Hinweises auf die Patenterteilung: **04.01.2006**
(21) Anmeldenummer: 02022485.3
(22) Anmeldetag: 05.10.2002
(51) Int. Cl.: B23K 26/02, B23K 26/24, B23K 26/32, B23K 26/42

(54) **Verfahren zum Abführen des gasförmigen Beschichtungswerkstoffes von Blechen**
Method for discharging protecting gas of sheets
Méthode d'évacuation de gaz de protection de tôles

(30) Priorität: 28.11.2001 DE 10158388
(43) Veröffentlichungstag der Anmeldung: 04.06.2003
(73) Patentinhaber: ThyssenKrupp Drauz Nothelfer GmbH, 74076 Heilbronn (DE)
(72) Erfinder: Möckel, Andreas, 08058 Zwickau (DE); Jucht, Horst, 09337 Hohenstein-Ernstthal (DE)
(74) Vertreter: Adams, Steffen

(56) Entgegenhaltungen:
- DE-A1- 4 219 549
- DE-U1- 8 900 556
- DE-U1- 20 105 725
- US-A- 4 682 002
- PATENT ABSTRACTS OF JAPAN Bd. 2000, Nr. 03, 30. März 2000 (2000-03-30) & JP 11 347764 A (SUMITOMO METAL IND LTD), 21. Dezember 1999 (1999-12-21)

## Beschreibung

Die Erfindung betrifft ein Verfahren zum Abführen des gasförmigen Beschichtungswerkstoffes von einen überlappenden Bereich aufweisenden Blechen aus dem Schweißnahtbereich beim Schweißen mittels Hochenergie-Schweißstrahl gemäß dem Oberbegriff des Anspruchs 1 (siehe z.B. US-A-4 682 002).

Es wurde bereits vorgeschlagen, zur Entgasung der Schweißnaht von gasförmigen Bestandteilen des Beschichtungswerkstoffes in der Ebene zwischen den beiden zu verschweißenden Blechen eine Schneide einer umlaufenden Messerrolle einzudrücken. Dadurch wird im Schweißbereich eine keilförmige Öffnung erzeugt, durch die die gasförmigen Bestandteile des Beschichtunmgswerkstoffes entweichen können. Diese Lösung eignet sich aus Platzgründen nur für das Verschweißen zweier Bleche, wobei Schwierigkeiten beim Eindrücken der Schneide der Messerrolle zwischen die beiden zu verschweißenden Bleche entstehen können. Dieser Nachteil kann im automatischen Betrieb derartiger Schweißanlagen nicht toleriert werden. (DE 101 16 402.5 A1).

Es ist Aufgabe der Erfindung, ein gattungsgemäßes Verfahren zum Entgasen von Laserschweißnähten in Randbereichen beschichteter Bleche zu schaffen, bei der die zum Stand der Technik aufgezeigten Probleme nicht bestehen und der automatische Betrieb solcher Schweißanlagen störungsfrei erfolgen kann.

Die erfindungsgemäße Aufgabe wird durch die Verfahrensschritte des Patentanspruches gelöst. Die Unteransprüche 2 bis 4 beinhalten besonders vorteilhafte Ausgestaltungen der Verfahrensmerkmale des Patentanspruches.
Da gasförmige Beschichtungswerkstoffe zwischen den Blechen nur im Bereich des Schweißvorganges auftreten, sind alle Verfahrensschritte jeweils der Bewegung des Schweißstrahles zugeordnet. Das Aufeinanderspannen der Bleche erfolgt nur in der Nähe des Schweißstrahles.
Dabei ist für unterschiedliches Schwingungsverhalten der Bleche Voraussetzung, dass die Auflagestellen der Spannmittel jeweils unterschiedlichen Abstand zum Schweißstrahl haben.

Das Schwingungsverhalten der Bleche wird durch ein mit dem Schweißstrahl mitlaufendes Anregungselement erzeugt, das an eines der Bleche nahe dessen freiem Ende anliegt und eines der freien Enden der Bleche zum Schwingen im Resonanzbereich anregt. Das Schwingen im Resonanzbereich ergibt jeweils die größte Spaltöffnung zwischen beiden Blechen zur Abführung des gasförmigen Beschichtungswerkstoffes der Bleche, der beim Schweißvorgang entsteht.

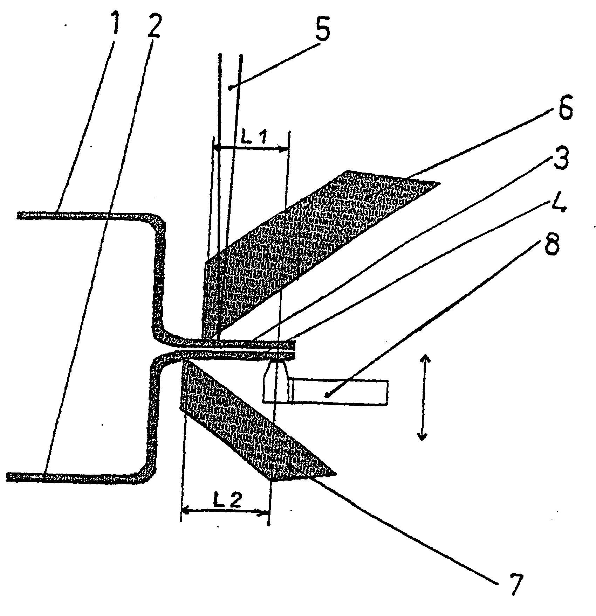

Die Erfindung ist an einem Ausfuhrungsbeispiel erläutert.
Die Zeichnung zeigt die Anordnung der verfahrensbezogenen Bauelemente.

Zwei Blechteile 1;2 sind an ihren freien Enden flanschförmig ausgebildet. Diese beiden Flansche 3;4 werden miteinander durch den Laserstrahl 5 einer Schweißanlage verschweißt.
Entsprechend den Korrosionsanforderungen an Kraftfahrzeugen sind die Blechteile 1;2 beidseitig mit Zink beschichtet. Die aufeinanderliegenden Flächen der Flansche 3;4 schließen somit die Zinkschichten ein. Beim Schweißvorgang verdampfen die Zinkschichten. Die Zinkgase der äußeren Schichten werden abgesaugt. Die Gase der aufeinanderliegenden Schichten müssen aus dem Spalt zwischen den beiden Flanschen 3;4 abgeführt werden.
Werden dafür keine Möglichkeiten geschaffen, so treten die Zinkgase explosionsartig durch die flüssige Schweißnaht aus und vermindern dadurch die Festigkeit der Schweißnaht erheblich. Um in der Nähe des Schweißvorganges einen Entgasungsspalt zwischen den aufeinanderliegenden Flanschen 3;4 kontinuierlich zu erzeugen, sind der obere Spanakegel 6 und der untere Spannkegel 7 mit unterschiedlichen Abständen L1 und L2 zum Schweißstrahl 5 und zu einem Anregungselement 8 angeordnet. Das einstellbare Schwingungen erzeugende Anregungselement 8 liegt nahe des freien Endes des unteren Flansches 4 an diesem permanent an. Durch die unterschiedlichen Längen der freien Enden der beiden Flansche 3;4 ergeben sich unterschiedliche Rückfederungsgeschwindigkeiten wegen der unterschiedlichen Federkonstanten. Wird der untere Flansch 4 durch das anliegende Anregungselement 8 so in Schwingung versetzt, dass das Flanschende im Resonanzbereich schwingt, so hat das obere Flanschende einen anderen Schwingungszustand, der nicht im Resonanzbereich liegt. Damit schwingen die Flanschenden unterschiedlich. Es entsteht zwischen den Flanschenden periodisch ein Abstand von 0,05 - 0,2 mm, durch den der Zinkdampf drucklos entweichen kann.

Da die zu verschweißenden Blechteile 1;2 von unterschiedlicher Form und Größe sein können, die Blechstärke und der Werkstoff der Bleche varüeren können sowie die Arbeitsbedingungen veränderlich sind, wird der jeweilige Resonanzzustand bei unterschiedlicher Frequenz und Amplitude des Anregungselementes 8 liegen. Bei wiederkehrenden Arbeitsbedingungen sind die zugehörigen Erregungsgrößen zu speichern. Bei häufig sich ändernden Arbeitsbedingungen ist die Auslenkung und zeitliche Veränderung des nicht direkt angeregten Flansches 3 ständig zu messen und mit dem Anregungssignal zu vergleichen. Durch die Veränderung der Anregungsfrequenz wird die Phasenverschiebung zwischen angeregter Schwingung und gemessener Frequenz fortlaufend maximiert.

## Patentansprüche

1. Verfahren zum Abführen des gasförmigen Beschichtungswerkstoffs von einen überlappenden Bereich aufweisenden Blechen (1; 2) aus dem Schweißnahtbereich beim Schweißen mittels Hochenergie-Schweißstrahl (5),
wobei das Aufeinanderspannen der freien Enden der Bleche (1;2) mittels mit dem Schweißstrahl (5) mitlaufenden Spannmitteln (6;7) erfolgt;
**dadurch gekennzeichnet,**
**dass** die Spannmittel ein an oberer Seite drückendes Spannmittel (6) und ein an unterer Seite drückendes Spannmittel (7) aufweisen; die Auflagestellen des oberen und des unteren Spannmittels (6;7) jeweils unterschiedlichen Abstand (21;22) zum Schweißstrahl (5) haben;
und **dass** nahe der freien Enden der zu verschweißenden Bleche (1;2) ein mit dem Schweißstrahl (5) mitlaufendes Anregungselement (8) an dem freien Ende eines der beiden Bleche (1;2) anliegt und eines der beiden freien Enden der Bleche (1;2) im Resonanzbereich zum Schwingen anregt.

2. Verfahren nach Anspruch 1,
**dadurch gekennzeichnet,**
**dass** die Schwingungen des Anregungselementes (8) eine Frequenz von 50 - 150 Hz und eine Amplitude von 0,05 - 0,2 mm haben.

3. Verfahren nach Anspruch 1 und 2,
**dadurch gekennzeichnet,**
**dass** das Erreichen des Resonanzbereiches für bestimmte zu verschweißende Bleche (1;2) beim Einstellen der Frequenz des Anregungselementes (8) durch Messung der Amplitude des Bleches (2), an dem das Anregungselement (8) nicht anliegt, erfolgt.

4. Verfahren nach Anspruch 1 bis 3,
**dadurch gekennzeichnet,**
**dass** die Auslenkung und zeitliche Veränderung des nicht direkt angeregten Bleches (3) gemessen, mit dem Anregvngssignal verglichen und durch Veränderung der Anregungsfrequenz die Phasenverschiebung zwischen angeregter Schwingung und gemessener Frequenz maximiert wird.

## Claims

1. Method for discharging the gaseous coating material of metal sheets (1; 2), which comprise an overlapping region, from the region of the weld seam during welding using a high energy welding beam (5),
wherein the free ends of the metal sheets (1; 2) are clamped one on top of the other using the clamping means (6; 7) which move simultaneously with the welding beam (5);
**characterised in that** the clamping means comprise one clamping means (6) which presses against the upper side and one clamping means (7) which presses against the lower side; the support points of the upper and lower clamping means (6; 7) each have a different spacing (21; 22) with respect to the welding beam (5); and **in that** in proximity to the free ends of the metal sheets (1; 2) which are to be welded an excitation member (8) which moves simultaneously with the welding beam (5) lies against the free end of one of the two metal sheets (1; 2) and causes one of the two free ends of the metal sheets (1; 2) to vibrate in the resonance range.

2. Method as claimed in Claim 1, **characterised in that** the vibrations of the excitation member (8) have a frequency of 50 - 150 Hz and an amplitude of 0.05 - 0.2 mm.

3. Method as claimed in Claim 1 and 2, **characterised in that** the resonance range for particular metal sheets (1; 2) to be welded is reached during adjustment of the frequency of the excitation member (8) by measuring the amplitude of the metal sheet (2) on which the excitation member (8) does not lie.

4. Method as claimed in Claim 1 to 3, **characterised in that** the deflection and temporal variation of the indirectly excited metal sheet (3) are measured, are compared with the excitation signal and the phase shift between the excited vibration and measured frequency is maximised by varying the excitation frequency.

## Revendications

1. Procédé d'évacuation de la matière de revêtement, à l'état gazeux, de tôles (1; 2) présentant une région de chevauchement, hors de la zone du joint de soudage lors du soudage à l'aide d'un rayonnement de soudage (5) à haute énergie,
dans lequel le serrage des extrémités libres des tôles (1; 2) l'une contre l'autre est produit par des moyens de serrage (6, 7) se déplaçant avec le rayonnement de soudage (5);
**caractérisé**
**en ce que** les moyens de serrage présentent un moyen de serrage (6) agissant sur la face supérieure et un moyen de serrage (7) agissant sur la face inférieure; les points d'appui du moyen de serrage supérieur et du moyen de serrage inférieur (6; 7) présentant chacun une distance différente (L1; L2) par rapport au rayonnement de soudage (5);
et **en ce que**, près des extrémités libres des tôles (1; 2) à souder, un organe d'excitation (8) se déplaçant avec le rayonnement de soudage (5) est en contact avec l'extrémité libre de l'une des deux tôles (1; 2), et excite en oscillation l'une des deux extrémités libres des tôles (1; 2), dans le domaine de la résonance.

2. Procédé selon la revendication 1,
**caractérisé en ce que**
les oscillations de l'organe d'excitation (8) ont une fréquence de 50 - 150 Hz et une amplitude de 0,05 - 0,2 mm.

3. Procédé selon les revendications 1 et 2,
**caractérisé en ce que**
l'atteinte du domaine de résonance pour des tôles (1; 2) à souder déterminées lors du réglage de la fréquence de l'organe d'excitation (8) se fait par mesure de l'amplitude de la tôle (2) sur laquelle ne se trouve pas l'organe d'excitation (8).

4. Procédé selon les revendications 1 à 3,
**caractérisé en ce que**
la flexion et la modification au cours du temps de la tôle (3) qui n'est pas directement excitée est mesurée, est comparée au signal d'excitation, et le déphasage entre l'oscillation excitée et la fréquence mesurée est maximisé par modification de la fréquence d'excitation.
